# EUROPÄISCHE PATENTSCHRIFT

(11) **EP 3 241 462 B1**
(45) Veröffentlichungstag und Bekanntmachung des Hinweises auf die Patenterteilung: **18.04.2018**
(21) Anmeldenummer: 16168093.9
(22) Anmeldetag: 03.05.2016
(51) Int. Cl.: A47B 96/20, E06B 9/11, B29C 53/04

(54) **MÖBEL- UND/ODER RAUMTEILERSTRUKTURELEMENT**
FURNITURE AND/OR PARTITION STRUCTURE ELEMENT
ELEMENT DE STRUCTURE DE MOBILIER ET/OU DE DIVISION D'ESPACE

(43) Veröffentlichungstag der Anmeldung: 08.11.2017
(73) Patentinhaber: CEKA GmbH & Co. KG, 36304 Alsfeld (DE)
(72) Erfinder: FLEISCHER, Joachim, 45239 Essen (DE)
(74) Vertreter: Nunnenkamp, Jörg

(56) Entgegenhaltungen:
- CH-A- 423 136
- DE-A1- 3 007 343
- DE-A1-102010 032 333

## Beschreibung

Die Erfindung betrifft ein Möbel- und/oder Raumteilerstrukturelement, mit zumindest einem raumseitigen Flächenelement, welches ganz oder teilweise als überwiegend glattflächiges Formvlies aus Kunststoff ausgebildet ist, wobei das Formvlies aus einem Faserverbundwerkstoff hergestellt ist.

Als Möbelstrukturelement werden im Rahmen der Erfindung flächige Hauptbestandteile von Möbeln bezeichnet, die wenigstens ein raumseitiges Flächenelement aufweisen bzw. als solches ausgebildet sind. Hierbei handelt es sich beispielsweise um Seitenwände oder Rückwände von Schränken. Genauso gut kann es sich bei den Möbelstrukturelementen um eine Kopfplatte eines Möbelschrankes oder auch eine Tischplatte eines Tisches handeln. Dabei sind die betreffenden Möbelstrukturelemente bzw. raumseitigen Flächenelemente jeweils einem Raum zugewandt, in dem das aus dem betreffenden Möbelstrukturelement aufgebaute Möbelstück platziert wird.

Grundsätzlich kann es sich bei dem Möbelstrukturelement auch um eine oder mehrere Frontplatten einer Schublade, einen freihängenden, also dem Raum zugewandten Schubladenkorpus etc. handeln. Ebenso sind Begrenzungsflächen von Theken denkbar. Bei den angesprochenen Möbeln und folglich auch den Möbelstrukturelementen handelt es sich typischerweise um Büromöbelstrukturelemente.

Daneben bezieht sich die Erfindung auf Raumteilerstrukturelemente und insbesondere Büroraumteilerstrukturelemente. Bei solchen Raumteilerstrukturelementen handelt es sich meistens um Flächengebilde, die in Büros oder auch ansonsten zur Raumteilung eingesetzt werden, beispielsweise zur Unterteilung eines Großraumbüros in mehrere Büroarbeitsplätze. Dazu kann das betreffende Raumteilerstrukturelement freistehend auf einem Boden platziert werden oder auch als Flächengebilde ausgelegt sein, welches an im fraglichen Büro aufgestellten Büromöbeln angebracht wird. Beispielsweise mag es sich bei dem Raumteilerstrukturelement um einen sogenannten Aufsteckscreen handeln, also ein Flächengebilde, welches auf die Tischplatte eines Bürotisches oder auch die Kopfplatte eines Büroschrankes aufgesteckt wird.

Im Rahmen der DD 284 189 A5 wird ein Verfahren zur Herstellung eines dünnen biegbaren Holzpartikelwerkstoffes dargestellt. Der Holzpartikelwerkstoff eignet sich für die Anwendung im Möbel- und Innenausbau. Die einzelnen Holzpartikel werden dabei durch Zusatz eines duroplastischen Klebstoffes verbunden. Auf diese Weise wird eine Art Vlies erzeugt, welches auch zu Platten verpresst werden kann. Der obligatorische Einsatz von Duroplasten und auch von einem Thermoplast als jeweils Deckschicht führt zu einem insgesamt beträchtlichen Gewicht der auf diese Weise hergestellten Möbelstrukturelemente, so dass ihr Einsatz beschränkt ist. Außerdem weisen derartige Möbelstrukturelemente keine Vorteile hinsichtlich der Raumakustik im Vergleich zu anderen glattflächigen Oberflächen aus beispielsweise Holzwerkstoffplatten auf.

Gerade in Büros und insbesondere Großraumbüros besteht jedoch ein Bedürfnis dahingehend, die Akustik insgesamt zu verbessern. Denn in solchen Großraumbüros wird oftmals parallel von verschiedenen Leuten telefoniert und werden unterschiedliche elektrische Geräte, wie beispielsweise Drucker, bedient. Diese sämtlichen Tätigkeiten resultieren in zugehörigen Schallquellen im Innern des Großraumbüros, die unter Umständen sogar örtlich veränderbar ausgebildet sind. Das wird zunehmend als störend empfunden und senkt die Arbeitseffizienz.

Aus diesem Grund hat man in der DE 20 2013 011 608 U1 bereits ein Akustikwandelement beschrieben, bei dem es sich um eine geprägte und Sicken aufweisende Platte aus Filz handelt. Das Akustik-Wandelement kann als Raumteiler bzw. zur Realisierung eines Raumteilerstrukturelementes eingesetzt werden. Ebenso lässt sich hiermit ein Möbelteil realisieren und folglich ein Möbelstrukturelement und/oder eine Blende.

Das bekannte Akustikwandelement mit den geprägten Sicken ist insgesamt aus Filz hergestellt. Bei Filz handelt es sich um ein textiles Flächengebilde aus wirren und unregelmäßig verschlungenen Fasern gleichbedeutend einem Vlies. Als Fasern schlägt die Lehre nach der DE 20 2013 011 618 U1 sowohl Chemiefasern als auch Pflanzenfasern, Wollfasern oder sogar tierische Haare und Kombinationen vor.

Durch die Ausprägung des bekannten Akustikwandelementes mit den obligatorischen Sicken ist die Herstellung relativ aufwändig. Außerdem lassen sich auf diese Weise letztlich nur Akustikwandelemente herstellen und umsetzen, die ein gewisses Größenraster aufweisen, welches der Form und Ausprägung der Sicken Rechnung trägt.

Durch die DE 10 2010 032 333 A1 ist ein gattungsgemäßes Möbel- und/oder Raumteilerstrukturelement bekannt geworden. Das dort beschriebene Möbelelement verfügt über eine Schallschutzvorrichtung, welche in einer Wirkverbindung mit einem Kastenmöbel steht. Die Schichten der Schallschutzvorrichtung können unter anderem aus einem Vlies hergestellt sein. Dabei werden unter anderem Vliese aus Polyester angesprochen. Weitere Einzelheiten zur Vliesherstellung lassen sich nicht entnehmen.

Vergleichbares gilt für die Lehre nach der CH 423 136, die sich mit einem Verfahren zur Herstellung von Bau- und Möbelteilen beschäftigt. Dabei kann auch eine verpresste Faserstoff-Kunststoffplatte zum Einsatz kommen.

Die DE 30 07 343 A1 befasst sich schließlich mit einem Verfahren zur Herstellung von Formteilen aus Faservlies. Dabei wird das Fasergut aus Fasern unter Hitze formgepresst, wobei die Wärmebehandlung dazu führt, dass der Bindungsprozess und der Formungsprozess gleichzeitig ablaufen. Als mögliche Anwendungsgebiete der bekannten Formteile aus einem Faservlies werden Rohrisolierungen oder auch Automobilanwendugnen als Bodenformteil bzw. Dachauskleidung ebenso wie Formteile für Miederwaren erwähnt.

Der Erfindung liegt das technische Problem zugrunde, ein derartiges Möbel- und/oder Raumteilerstrukturelement so weiter zu entwickeln, dass unter Berücksichtigung niedriger Herstellungskosten und einer flexiblen Flächengestaltung ein zugleich einfach aufgebautes und leichtgewichtiges Produkt zur Verfügung gestellt wird.

Zur Lösung dieser technischen Problemstellung ist ein gattungsgemäßes Möbel- und/oder Raumteilerstrukturelement im Rahmen der Erfindung dadurch gekennzeichnet, dass der Faserverbundwerkstoff aus Kunststofffasern besteht, die mechanisch und/oder chemisch und/oder thermisch sowie bindemittelfrei miteinander verbunden sind, wobei das Formvlies ein spezifisches Gewicht von weniger als 0,6 g/cm³ aufweist.

Im Rahmen der Erfindung ist das raumseitige Flächenelement zunächst einmal ganz oder teilweise als Formvlies aus Kunststoff ausgebildet. Bei einem solchen Formvlies handelt es sich um ein Vlies aus Kunststoff, also ein textiles Flächengebilde aus Kunststofffasern. Holzfasern oder auch Naturfasern kommen folglich ausdrücklich nicht zum Einsatz.

Da jedoch das raumseitige Flächenelement ganz oder teilweise als überwiegend glattflächiges Formvlies aus Kunststoff ausgebildet ist, besteht die grundsätzliche und weitere Möglichkeit, das glattflächige Formvlies aus Kunststoff prinzipiell mit einem Wollvlies oder Wollfilz oder auch anderen Materialien zu ergänzen respektive zu kaschieren. Das heißt, von der Erfindung werden ausdrücklich auch raumseitige Flächenelemente mit umfasst, die beispielsweise mit einem Kern aus dem glattflächigen Formvlies aus Kunststoff ausgerüstet sind und zusätzlich eine Beschichtung bzw. Kaschierung aufweisen. Die Beschichtung bzw. Kaschierung kann ebenfalls aus einem textilen Flächenmaterial hergestellt sein, beispielsweise aus einem Vlies oder Filz. Selbst eine Kunststofffolie ist denkbar. Auch Farbkaschierungen in unterschiedlichen Farben werden von der Erfindung umfasst.

Durch den Rückgriff auf Kunststofffasern zur Realisierung des glattflächigen Formvlieses aus Kunststoff werden einerseits hygienische Anforderungen erfüllt und können andererseits Brandschutzanforderungen umgesetzt werden. Denn solche Kunststofffasern lassen sich beispielsweise flammfest ausrüsten, was bei Holzfasern oder Naturfasern im Regelfall nicht gelingt.

Darüber hinaus sind solche Kunststofffasern mit dem weiteren Vorteil verbunden, dass sie sich beispielsweise färben lassen oder farbig ausgelegt sein können, so dass das mit Hilfe der Kunststofffasern erzeugte erfindungsgemäße Formvlies praktisch jede denkbare Farbgestaltung annimmt oder annehmen kann. Selbstverständlich sind auch Mischfarben oder mehrfarbige Ausrüstungen oder sogar Holznachbildungen denkbar und lassen sich auf diese Weise realisieren.

Bei dem eingesetzten Formvlies aus Kunststoff handelt es sich um ein Vlies, welches im Regelfall durch eine Wärmebehandlung der eingesetzten Kunststofffasern in praktisch jede denkbare Form gebracht werden kann. Das lässt sich im Kern durch den Rückgriff auf Kunststofffasern erklären, die bei einem entsprechenden Formprozess zumindest so weit erwärmt werden, dass sie ihren Erweichungspunkt überschritten haben. Dadurch kann das fragliche Formvlies beispielsweise in einer Presse mit Matrize und Patrize in die gewünschte Form gebracht werden. Das ist grundsätzlich bekannt, wozu auf die einleitend bereits gewürdigte DE 30 07 343 A1 Bezug genommen sei, die sich mit dem dort bereits beschriebenen Verfahren zur Herstellung von Formteilen aus Faservlies beschäftigt.

Durch die zuvor beschriebene Herstellungsweise des eingesetzten Formvlieses aus Kunststoff im Zuge einer Wärmebehandlung der Kunststofffasern besteht darüber hinaus die Möglichkeit, das fragliche Formvlies zu prägen. Im Rahmen dieser Prägung können nicht nur Oberflächenstrukturen definiert werden, sondern es besteht auch die Möglichkeit, das Formvlies mit eingeprägten Gelenken auszurüsten, um das auf diese Weise realisierte raumseitige Flächenelement beispielsweise beweglich zu gestalten. Ebenso können Gravuren oder Drucke auf- oder eingebracht werden. Ferner kann das Formvlies mit mechanischen Befestigungs- oder Verbindungspunkten ausgerüstet werden.

Darüber hinaus besteht die Möglichkeit, das glattflächige Formvlies aus Kunststoff nach der Erfindung mit in das Innere eingebrachten Elementen auszurüsten. Bei diesen fraglichen Elementen kann es sich um eingebrachte Verstärkungen wie Metallplatten handeln. Es ist auch möglich, im Innern des Formvlieses beispielsweise Leerrohre vorzusehen, durch welche Kabel geführt werden. Dadurch sind die Kabel nicht sichtbar. Grundsätzlich kann das glattflächige Formvlies aus Kunststoff nach der Erfindung aber auch mit Aussparungen, Hohlbohrungen im Innern etc. ausgestaltet werden, durch welche beispielsweise Kabel geführt werden, ohne dass hierzu zusätzliche Leerrohre eingebracht werden. Denn die Auslegung des Formvlieses aus Kunststoff sorgt für die erforderliche elektrische Isolation.

Für die Realisierung des erfindungsgemäß eingesetzten Formvlieses aus Kunststoff werden nicht nur Kunststofffasern eingesetzt, sondern diese Kunststofffasern werden mechanisch und/der chemisch und/oder thermisch miteinander verfestigt. In diesem Zusammenhang ist von besonderer Bedeutung, dass die Kunststofffasern bindemittelfrei miteinander verbunden sind. Denn durch den Verzicht auf ein zusätzliches Bindemittel wird gewährleistet, dass das Formvlies im Rahmen der Erfindung praktisch nur aus den an jeweils Kreuzungs- und Berührstellen miteinander verbundenen Kunststofffasern aufgebaut ist. Dadurch erhält das Formvlies nicht nur einen besonders lockeren Aufbau, sondern werden geringe spezifische Gewichte für solche Formvliese einerseits beobachtet und weisen diese günstige Akustikeigenschaften andererseits auf.

Tatsächlich verfügt das auf diese Weise hergestellte Formvlies erfindungsgemäß über ein spezifisches Gewicht von weniger als 0,6 g/cm³ und vorzugsweise von 0,5 g/cm³ und weniger. Geht man von einer Materialstärke einer auf diese Weise realisierten Platte von bis zu 50 mm, insbesondere bis zu ca. 30 mm und vorzugsweise in einem Bereich von 5 mm bis 20 mm aus, so bemisst sich das durchschnittliche Flächengewicht einer solchen Formvliesplatte zu in etwa 2000 g/m² bis 3000 g/m², was deutlich niedriger angesiedelt ist als das Plattengewicht von Holzwerkstoffplatten. Tatsächlich werden für solche Holzwerkstoffplatten Flächengewichte von 9000 g/m² und mehr beobachtet, betragen also das 3- bis 4-fache des Formvlieses.

Darüber hinaus zeichnen sich derartige Formvliese aus Kunststoff bzw. Kunststofffasern durch eine hohe UV-Beständigkeit aus, so dass selbst in einem lichtdurchfluteten Büro und bei einem Einsatz des Formvlieses als Frontabdeckung bei einem Möbelschrank ein Ausbleichen der Farbe des Formvlieses nicht oder kaum beobachtet wird. Sofern an dieser Stelle als Kunststofffasern vorteilhaft Polyesterfasern bzw. PET-Fasern eingesetzt werden, neigt das fragliche Formvlies auch nicht zu elektrostatischen Aufladungen. Denn Polyesterfasern verfügen über eine äußerst geringe Fähigkeit sich elektrostatisch aufzuladen. Das ist von besonderer Bedeutung vor dem Hintergrund, dass das fragliche Formvlies insbesondere zur Herstellung von Büromöbeln zum Einsatz kommt und elektrostatische Aufladung in Verbindung mit in Büros eingesetzten Computern, Computerlaufwerken oder auch Druckern ausdrücklich zu vermeiden sind.

Hinzukommt, dass sich solche vorteilhaft eingesetzten PET- bzw. Polyesterfasern besonders einfach und dauerhaft einfärben lassen, wie dies zuvor bereits beschrieben wurde. Außerdem ist die Feuerschutzbeständigkeit derjenigen von Naturfasern oder Holzfasern deutlich überlegen. Denn Formvliese bestehen üblicherweise die Brandprüfung nach DIN EN 1021 Teil 1 und 2, welche die Endzündbarkeit von Polstermöbeln bewertet. Dabei kann der Brandwiderstand insgesamt noch durch Zumischung von brandhemmenden Fasern oder eine Beschichtung der eingesetzten Kunststofffasern erhöht werden.

Durch den Einsatz von vorteilhaft Polyesterfasern als Kunststofffasern bei der Realisierung des Formvlieses werden eine insgesamt robuste Gestaltung und ein entsprechendes Material zur Verfügung gestellt, dem mehrere Jahrzehnte Lebensdauer prognostiziert werden können. Als besondere weitere Eigenschaft für das Formvlies beobachtet man, dass die eingesetzten Formvliese im an dieser Stelle relevanten Frequenzbereich von 100 Hz bis 5000 Hz einen Schallabsorptionsgrad von wenigstens 0,5 erreichen. Bei einem solchen Schallabsorptionsgrad werden wenigstens 50 % der auftreffenden Schallenergie absorbiert und im Maximum 50 % der Schallenergie reflektiert. Das gilt im angegebenen Frequenzbereich von 100 Hz bis 5000 Hz, der nahezu ausschließlich in Büroräumen beobachtet wird.

Diese besonderen akustischen Eigenschaften lassen sich primär darauf zurückführen, dass die Kunststofffasern bindemittelfrei miteinander verbunden werden. Denn hierdurch bilden die das erfindungsgemäße Formvlies definierenden Kunststofffasern ein räumliches Netzwerk aus den jeweils in lediglich Kreuzungs- und Berührstellen miteinander verbundenen Kunststofffasern mit dazwischen verbleibenden Freiräumen in chaotischer Anordnung. Dieses stellt eine optimale Oberfläche zur Absorption von auftreffendem Schall dar, und zwar auch und insbesondere dann, wenn das Formvlies überwiegend glattflächig ausgebildet ist. Das heißt, das Einbringen von Sicken, wie sie der Stand der Technik nach der DE 20 2013 011 608 U1 als gleichsam unverzichtbar ansieht, ist ausdrücklich nicht erforderlich, so dass sich die erfindungsgemäß verwendeten Formvliese in jeder denkbaren Größe und Gestalt einfach, schnell und preisgünstig herstellen lassen.

Die bindemittelfreie Verbindung der Kunststofffasern und insbesondere Polyesterfasern wird im Regelfall so vorgenommen und umgesetzt, dass die jeweiligen Kunststofffasern zunächst mit einer Weichmacherlösung benetzt und dann bei einer erhöhten Temperatur miteinander verklebt werden. Als erhöhte Temperatur empfiehlt die Erfindung Temperaturen im Bereich von ca. 80 °C bis 160 °C. Bei solchen Temperaturen wird im Allgemeinen der Schmelzpunkt der eingesetzten Kunststofffasern erreicht oder geringfügig überschritten, so dass bei einem anschließenden Pressvorgang unter Berücksichtigung der angegebenen erhöhten Temperatur die einzelnen Kunststofffasern ohne zusätzlich eingebrachtes Bindemittel an ihren Kreuzungs- und Berührstellen wunschgemäß miteinander verbunden werden. Eine solche Vorgehensweise ist zwar grundsätzlich durch die DE 1 237 057 A oder auch die DE 1 469 347 A bekannt, allerdings bisher nicht in Verbindung mit und zur Herstellung von Möbel- und/oder Raumstrukturelementen zum Einsatz gekommen.

Selbstverständlich kann es sich bei den eingesetzten Kunststofffasern auch um sogenannte Bikomponentenfasern handeln. In diesem Fall kommen vorteilhaft Co-Polyesterfasern zum Einsatz, die mit einem Polyesterkern einerseits und einer Ummantelung mit einem Polyester geringeren Schmelzpunktes andererseits ausgerüstet sind. Auch Materialkombinationen unterschiedlicher Kunststoffe und hieraus hergestellter Bikomponentenfasern werden ausdrücklich von der Erfindung mit umfasst.

Schließlich lässt sich das Formvlies mit eingebrachten Schnitten ausrüsten. Dadurch kann mit Hilfe des Formvlieses ein flexibler bogenförmiger Verlauf des Flächenelementes realisiert werden, ähnlich einem Rollladen. Um dies im Detail zu erreichen, werden die fraglichen Schnitte im Allgemeinen quer zur Längserstreckung des Formvlieses in dieses eingebracht. Außerdem hat es sich bewährt, die jeweiligen Schnitte in gleichem Abstand zu setzen. Als Schnitte können sowohl gerade Schnitte als auch V-förmige Schnitte zur Anwendung kommen. Ein V-förmiger Einschnitt oder V-förmige Einschnitte empfehlen sich für den Fall, dass das solchermaßen behandelte und überwiegend glattflächige Formvlies aus Kunststoff beispielsweise gefaltet oder abgewinkelt werden soll.

Dadurch wird auch im Bereich eines durchgängigen Formvliesrückens eine optisch gleichmäßige Ausbildung erreicht.

Zum Einbringen der Schnitte wird man meistens so vorgehen, dass die Schnitte bis in eine Schnitttiefe des Formvlieses reichen, die maximal bis ca. 100 % und regelmäßig maximal bis ca. 95 % und insbesondere maximal bis ca. 90 %, vorzugsweise bis ca. 80 % der Materialstärke des Formvlieses beträgt. Das heißt, bei dem Schnitt in das Formvlies verbleibt der zuvor bereits angesprochene und durchgängige Formvliesrücken. Dieser Formvliesrücken übernimmt auf diese Weise gleichsam die Funktion eines Verbinders für die einzelnen hierdurch hergestellten und gegeneinander bewegbaren Lamellen. Dadurch lässt sich auf diese Weise mit Hilfe eines solchen Formvlieses beispielsweise eine Rolloabdeckung bei einem Büroschrank oder allgemein in einem Schrank realisieren, die nicht nur einem vorgegebenen bogenförmigen Verlauf innerhalb von Schienen folgt, sondern durch ihre Materialwahl auch und insbesondere auftreffenden Schall besonders wirkungsvoll dämpft und absorbiert.

Tatsächlich ist aufgrund der zuvor bereits beschriebenen und erreichten Schallabsorptionsgrade damit zu rechnen, dass bei einer Ausrüstung einzelner oder sämtlicher Möbelstücke in einem Großraumbüro mit zumindest einem erfindungsgemäß gestalteten Möbelstrukturelement der im Großraumbüro herrschende Schallpegel deutlich gesenkt wird. Beispielsweise wird man Reduzierungen des Schallpegels um ein Drittel bis in etwa zur Hälfte erreichen können, so dass die Arbeitsatmosphäre insgesamt und auch die Arbeitseffizienz deutlich verbessert sind. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: einen Schrank und insbesondere Büroschrank mit einer frontseitigen Rolloabdeckung, die als erfindungsgemäßes Möbelstrukturelement ausgelegt ist,
- **Fig. 2**: einen anderen Büroschrank, bei dem eine Rückwand als erfindungsgemäßes Möbelstrukturelement ausgeführt ist,
- **Fig. 3**: einen Büroschrank, welcher eine frontseitige und als erfindungsgemäßes Möbelstrukturelement ausgeführte Schiebetür ebenso wie ein aufgesetztes Raumteilerstrukturelement nach der Erfindung aufweist sowie
- **Fig. 4**: verschiedene Varianten anderer Raumteilerstrukturelemente entsprechend der Erfindung.

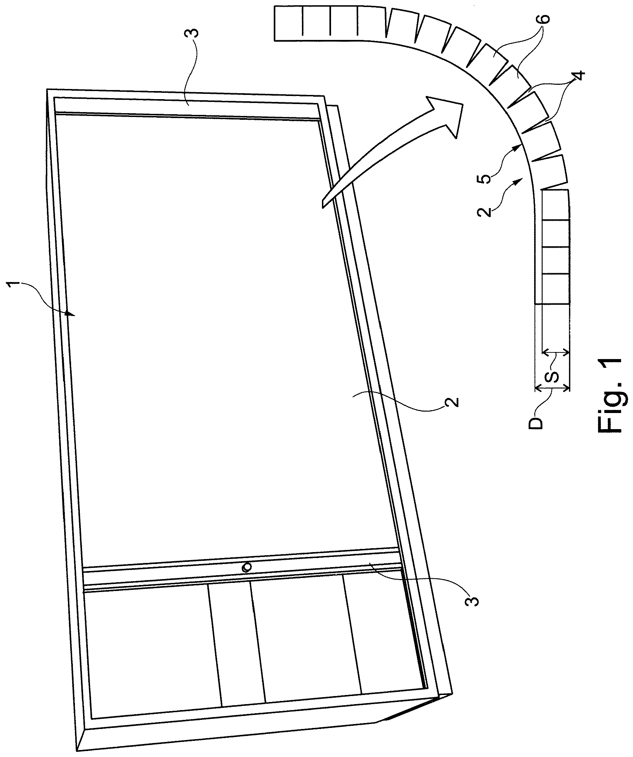

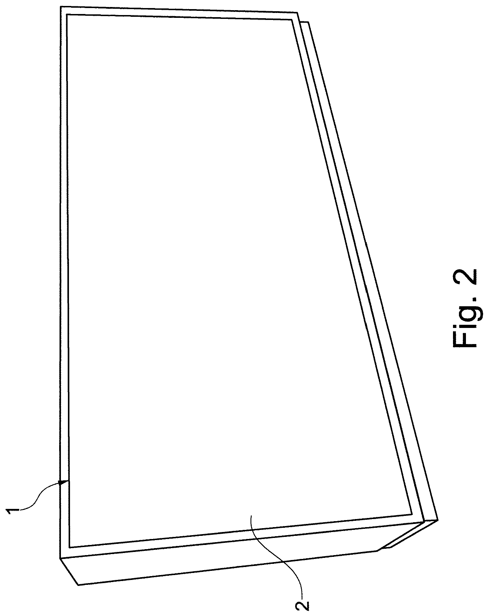

In der Fig. 1 ist ein Möbelstück dargestellt, bei dem es sich im Ausführungsbeispiel um ein Büromöbelstück, nämlich einen beispielhaft gezeigten Aktenschrank oder allgemein ein Büroschrank handelt. Das Möbelstück ist mit einem Möbelstrukturelement 1 ausgerüstet, bei dem es sich im Ausführungsbeispiel nach der Fig. 1 um eine Frontplatte bzw. um eine frontseitige Abdeckung des Möbelstückes respektive des Aktenschrankes handelt. Bei dem Möbelstück nach der Fig. 2 ist das Möbelstrukturelement 1 als Rückwand des dort dargestellten Büroschrankes ausgelegt. Grundsätzlich kann es sich bei dem Möbelstrukturelement 1 aber auch um eine Seitenwand oder sogar eine Kopfplatte des Schrankes handeln. Das ist jedoch im Detail nicht gezeigt. Das Möbelstrukturelement 1 verfügt über ein raumseitiges Flächenelement 2.

Tatsächlich setzt sich das Möbelstrukturelement 1 bzw. die frontseitige Abdeckung nach der Fig. 1 aus einerseits dem raumseitigen Flächenelement 2 und andererseits zwei randseitigen Schienen 3 zusammen. Die beiden randseitigen Schienen 3 begrenzen das raumseitige Flächenelement 2 und dienen zu seiner Bedienung bzw. Beaufschlagung, wie nachfolgend noch näher erläutert wird.

Tatsächlich handelt es sich bei dem raumseitigen Flächenelement 2 im Rahmen der Erfindung um ein überwiegend glattflächiges Formvlies aus Kunststoff, wie es ergänzend in der Fig. 1 perspektivisch dargestellt ist. Bei dem fraglichen Formvlies aus Kunststoff handelt es sich um ein solches, welches mit eingebrachten Schnitten 4 ausgerüstet ist. Die fraglichen Schnitte 4 sind jeweils quer zur Längserstreckung des Formvlieses in dieses eingebracht, und zwar in jeweils gleichem Abstand zueinander und ausgehend von einer gemeinsamen Oberfläche des Formvlieses.

Tatsächlich ist das Formvlies insgesamt flächig und überwiegend glattflächig ausgelegt und verfügt über einen mehr oder minder plattenförmigen Charakter. Die einzelnen Schnitte 4 werden nun in das Formvlies ausweislich der Fig. 1 so weit eingebracht, dass sie zu einer Schnitttiefe S korrespondieren, welche im Ausführungsbeispiel maximal 90 % bzw. maximal 80 % einer Materialstärke D des Formvlieses beträgt. Auf diese Weise wird im Bereich der Schnitte 4 ein durchgängiger Formvliesrücken 5 zur Verfügung gestellt und verbleibt, welcher dafür sorgt, dass die auf diese Weise definierten einzelnen Lamellen 6 mit Hilfe des Formvliesrückens 5 miteinander verbunden sind.

Die einzelnen Lamellen 6 lassen sich gegeneinander verschwenken, so dass auf diese Weise das Formvlies in einen flexiblen bogenförmigen Verlauf des auf diese Weise realisierten Flächenelementes 2 gebracht werden kann, wie dies in der Fig. 1 angedeutet ist. Dadurch kann automatisch und gleichsam zwanglos ein Abdeckrollo bzw. Querrollo als frontseitige Abdeckung 1 für den in der Fig. 1 dargestellten Büroschrank bzw. Aktenschrank zur Verfügung gestellt werden.

Da das Formvlies insgesamt aus einem Faserverbundwerkstoff aus Kunststofffasern hergestellt ist und im Übrigen die einzelnen Kunststofffasern bindemittelfrei miteinander verbunden sind, verfügt das Formvlies und folglich die frontseitige Abdeckung 1 bzw. das an dieser Stelle realisierte Querrollo oder Abdeckrollo über eine zwar überwiegend glattflächige Oberfläche, die jedoch insgesamt zerklüftet ausgebildet ist. Denn der Verzicht auf ein Bindemittel zur Verbindung der einzelnen Kunststofffasern untereinander führt dazu, dass die Kunststofffasern lediglich an Kreuzungs- und Berührstellen miteinander verbunden sind, wie dies einleitend bereits beschrieben wurde.

Dadurch lässt sich ein Absorptionsgrad von 0,5 und mehr zur Verfügung stellen, so dass im Regelfall mehr als 50 % der auf die fragliche Abdeckung 1 auftreffenden Schallenergie von dieser absorbiert wird. Dadurch sorgt das auf diese Weise realisierte Möbelstück zugleich für eine wirksame Reduzierung des Schallpegels am Aufstellungsort und insbesondere in dem zugehörigen Raum, in welchem das fragliche Möbelstück platziert wird. Das Formvlies verfügt insgesamt über eine Materialstärke bzw. Materialdicke D, die bis zu 50 mm betragen kann. Im Regelfall liegt die fragliche Materialdicke bzw. Materialstärke D im Bereich von 5 mm bis 20 mm. Bei den eingesetzten Kunststofffasern zur Realisierung des Formvlieses handelt es sich typischerweise um Polyester bzw. PET-Fasern, die nicht nur brandhemmend ausgerüstet werden können, sondern sich auch in praktisch jeder beliebigen Farbe ausrüsten lassen. Außerdem neigen solche Polyesterfasern praktisch nicht zu einer elektrostatischen Aufladung und sind folglich für den Einsatzzweck bei der Ausrüstung von beispielsweise Großraumbüros prädestiniert.

Hinzukommt, dass solche Formvliese über ein geringes spezifisches Gewicht und auch ein geringes Flächengewicht im Bereich von ca. 2000 g/m² bis 3000 g/m² verfügen, so dass ein entsprechend aufgebauter Büroschrank oder allgemein ein entsprechend aufgebautes Büromöbelstück über ein verringertes Gewicht im Vergleich zu einem ähnlich aufgebauten Möbelstück aus Holz oder Holzwerkstoffplatten verfügt.

Im Rahmen der Variante nach der Fig. 2 ist das Möbelstrukturelement 1 mit einem raumseitigen Flächenelement 2 ausgerüstet, welches in diesem Beispielfall von seiner Ausdehnung her dem Möbelstrukturelement 1 entspricht. Tatsächlich ist das Möbelstrukturelement 1 im Beispielfall nach der Fig. 2 als Rückwand des dort dargestellten Möbelstückes bzw. Büroschrankes ausgebildet. Sofern der fragliche Büroschrank beispielsweise freistehend in einem Großraumbüro aufgestellt wird oder als Raumteiler fungiert, übernimmt die auf diese Weise ausgerüstete Rückwand mit dem raumseitigen und als Formvlies ausgelegten Flächenelement 2 die gewünschte schallabsorbierende Wirkung am Aufstellungsort.

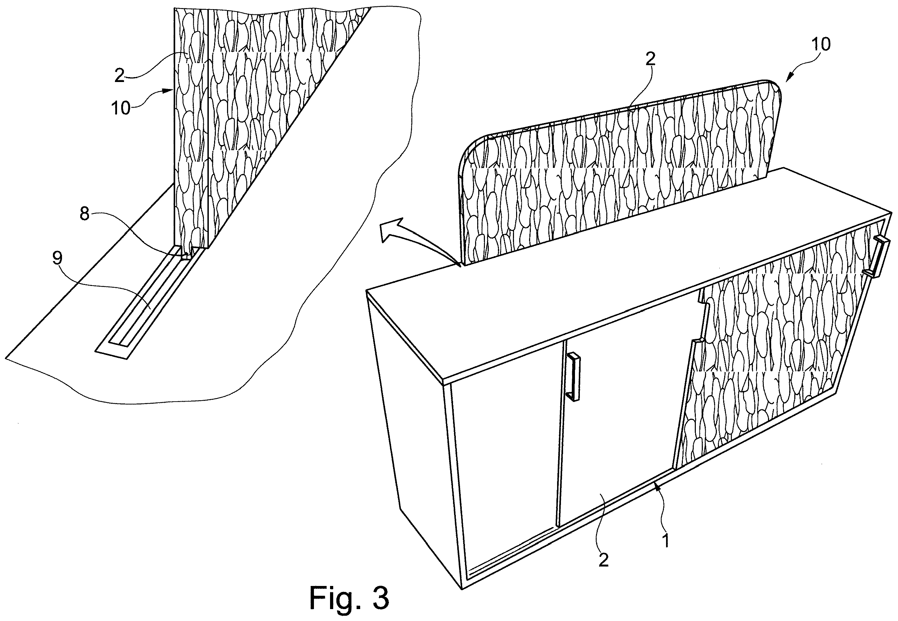

Im Rahmen der Fig. 3 ist eine weitere Variante dargestellt. Hier beobachtet man ein Möbelstrukturelement 1, welches mit einem raumseitigen Flächenelement 2 sowie zusätzlich einer Handhabe ausgerüstet ist. Bei dem Flächenelement 2 handelt es sich erneut um das überwiegend glattflächige Formvlies aus Kunststoff, welches im dargestellten Beispielfall nach der Fig. 3 als Schiebetür ausgebildet ist. Dazu mag das Formvlies mit entsprechenden Federn 8 ausgerüstet sein, die in zugehörigen Nuten 9 aufgenommen werden und hierin gleiten können. Eine vergleichbare Nut-Federverbindung mit Feder 8 am Formvlies und einer zugehörigen Nut 9 zur Aufnahme der Feder 8 ist in Verbindung mit einem in der Fig. 3 ebenfalls dargestellten Raumteilerstrukturelement 10 umgesetzt und realisiert.

Bei dem Raumteilerstrukturelement 10 handelt es sich um einen sogenannten Aufsatzschirm 10, der auf das fragliche Möbelstück bzw. dessen Kopfplatte aufgesetzt ist. Dazu ist die Kopfplatte mit der im Detail in der Fig. 3 dargestellten Nut 9 ausgerüstet, in welche die Feder 8 am fraglichen Raumteilerstrukturelement 10 eingreift.

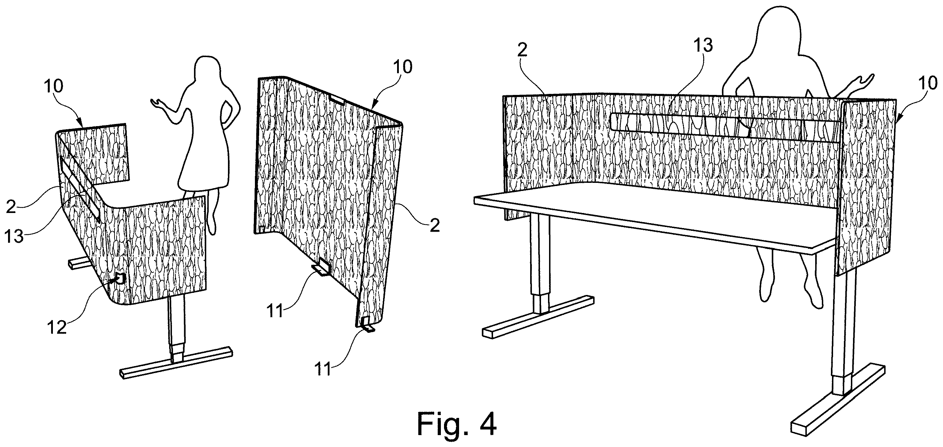

Die Fig. 4 zeigt schließlich verschiedene Varianten von Raumteilerstrukturelementen 10, die jeweils ganz oder teilweise aus dem erfindungsgemäßen Formvlies hergestellt sind. Man erkennt, dass die Raumteilerstrukturelemente 10 einen teils bogenförmigen Verlauf aufweisen und mit zusätzlichen Füßen 11 und gegebenenfalls Befestigungselementen 12 zur Anbringung an einem dort dargestellten Bürotisch respektive zur Aufstellung auf dem Boden ausgerüstet sind. Im Rahmen der Darstellung füllt das raumseitige Flächenelement 2 gleichsam das gesamte Raumteilerstrukturelement 10 aus.

Dabei versteht es sich, dass in das solchermaßen realisierte Raumteilerstrukturelement 10 grundsätzlich auch Sichtbereiche 13 eingebracht werden können. Solche Sichtbereiche 13 lassen sich einfach dadurch realisieren, dass der Sichtbereich 13 über eine so geringe Materialstärke D des Formvlieses verfügt, dass dieses ganz oder teilweise durchsichtig ist oder wird.

Während man beispielsweise für das Formvlies und das entsprechend gestaltete Raumteilerstrukturelement 10 überwiegend mit einer Materialdicke D von im Minimum 10 mm arbeitet, ist es denkbar, dass dieselbe Materialstärke bzw. Materialdicke D im Sichtbereich 13 Werte von 0,5 mm oder noch weniger einnimmt, so dass dieser Sichtbereich 13 gleichsam wie ein teilweise durchsichtiger Vliesvorhang gestaltet ist. Selbstverständlich kann der Sichtbereich 13 auch mit einem eingelassenen Kunststofffenster oder schlicht und ergreifend ausgespart werden. Das ist jedoch nicht dargestellt.

## Patentansprüche

1. Möbel- und/oder Raumteilerstrukturelement (1; 10), mit zumindest einem raumseitigen Flächenelement (2), welches ganz oder teilweise als überwiegend glattflächiges Formvlies aus Kunststoff ausgebildet ist, wobei das Formvlies aus einem Faserverbundwerkstoff hergestellt ist, **dadurch gekennzeichnet, dass**
- der Faserverbundwerkstoff aus Kunststofffasern besteht, die mechanisch und/oder chemisch und/oder thermisch sowie bindemittelfrei miteinander verbunden sind, wobei
- das Formvlies ein spezifisches Gewicht von weniger als 0,6 g/cm³ aufweist.

2. Element nach Anspruch 1, **dadurch gekennzeichnet, dass** als Kunststofffasern PET-Fasern eingesetzt werden.

3. Element nach Anspruch 1 oder 2, **dadurch gekennzeichnet, dass** das Formvlies plattenförmig und ggf. räumlich strukturiert ausgebildet ist.

4. Element nach einem der Ansprüche 1 bis 3, **dadurch gekennzeichnet, dass** das Formvlies eine Materialstärke (D) bis ca. 50 mm, insbesondere bis ca. 30 mm und vorzugsweise von 5 mm bis 20 mm aufweist

5. Element nach einem der Ansprüche 1 bis 4, **dadurch gekennzeichnet, dass** das Formvlies mit eingebrachten Schnitten (4) ausgerüstet ist, um beispielsweise einen flexiblen bogenförmigen Verlauf des Flächenelementes (2) zu realisieren.

6. Element nach Anspruch 5, **dadurch gekennzeichnet, dass** die Schnitte (4) quer zur Längserstreckung des Formvlieses verlaufen.

7. Element nach Anspruch 5 oder 6, **dadurch gekennzeichnet, dass** die Schnitte (4) bis in eine Schnitttiefe (S) des Formvlieses reichen, die bis maximal ca. 100 %, insbesondere bis maximal ca. 95 % und vorzugsweise bis maximal ca. 90 % sowie ganz besonders bevorzugt bis maximal ca. 80 % der Materialstärke (D) des Formvlieses beträgt, so dass ein durchgängiger Formvliesrücken (5) verbleibt.

8. Element nach einem der Ansprüche 1 bis 7, **dadurch gekennzeichnet, dass** das Formvlies farbig ausgelegt ist.

9. Verwendung von Formvliesen zur Herstellung von Möbel- und/oder Raumstrukturelementen (1; 10) nach einem der Ansprüche 1 bis 8, wobei das Formvlies aus Kunststofffasern hergestellt wird, die an Kreuzungs- und Berührstellen miteinander verbunden werden.

10. Verwendung nach Anspruch 9, **dadurch gekennzeichnet, dass** die Kunststofffasern bindemittelfrei miteinander verbunden werden, indem sie mit einer Weichmacherlösung benetzt und bei erhöhter Temperatur miteinander verklebt werden.

11. Verwendung nach Anspruch 10, **dadurch gekennzeichnet, dass** die Kunststofffasern bei einer Temperatur im Bereich von 80 °C bis 160 °C miteinander verklebt werden.

## Claims

1. A furniture and/or room-divider structural element (1; 10), having at least one room-side surface element (2), which is constructed wholly or in part as an overwhelmingly smooth shaped non-woven made from plastic, the shaped non-woven being produced from a fibre-composite material, **characterized in that**
- the fibre-composite material consists of plastic fibres, which are connected to one another mechanically and/or chemically and/or thermally and binder-free manner, wherein
- the shaped non-woven has a specific weight of less than 0.6 g/cm³.

2. The element according to Claim 1, **characterized in that** PET fibres are used as plastic fibres.

3. The element according to Claim 1 or 2, **characterized in that** the shaped non-woven is constructed in a plate-shaped and if appropriate spatially structured manner.

4. The element according to one of Claims 1 to 3, **characterized in that** the shaped non-woven has a material thickness (D) of up to approx. 50 mm, particularly of up to approx. 30 mm, and preferably from 5 mm to 20 mm.

5. The element according to one of Claims 1 to 4, **characterized in that** the shaped non-woven is equipped with introduced cuts (4), in order for example to realize a flexible arcuate course of the surface element (2).

6. The element according to Claim 5, **characterized in that** the cuts (4) run transversely to the longitudinal extent of the shaped non-woven.

7. The element according to Claim 5 or 6, **characterized in that** the cuts (4) reach up to a depth of cut (S) of the shaped non-woven, which is up to a maximum of approx. 100%, particularly up to a maximum of approx. 95% and preferably up to a maximum of approx. 90%, and very particularly preferably up to a maximum of approx. 80% of the material thickness (D) of the shaped non-woven, so that a continuous shaped non-woven backing (5) remains.

8. The element according to one of Claims 1 to 7, **characterized in that** the shaped non-woven is designed in a coloured manner.

9. The use of shaped non-wovens for producing furniture and/or room structural elements (1; 10) according to one of Claims 1 to 8, the shaped non-woven being produced from plastic fibres, which are connected to one another at intersection and contact points.

10. The use according to Claim 9, **characterized in that** the plastic fibres are connected to one another in a binder-free manner, **in that** the plastic fibres are wetted using a plasticizer solution and bonded to one another at elevated temperature.

11. The use according to Claim 10, **characterized in that** the plastic fibres are bonded to one another at a temperature in the range from 80°C to 160°C.

## Revendications

1. Elément de structure de mobilier et/ou de division d'espace (1 ; 10) avec au moins un élément de surface côté pièce (2), lequel est entièrement ou partiellement réalisé en tant que nappe de formage en plastique essentiellement à surface lisse, dans lequel la nappe de formage est fabriquée à partir d'un matériau renforcé par des fibres,
**caractérisé en ce que**
- le matériau renforcé par des fibres se compose de fibres synthétiques qui sont reliées ensemble de façon mécanique et/ou chimique et/ou thermique ainsi que sans liant, dans lequel
- la nappe de formage présente un poids spécifique de moins de 0,6 g/cm³.

2. Elément selon la revendication 1, **caractérisé en ce qu'**en guise de fibres synthétiques, on utilise des fibres PET.

3. Elément selon la revendication 1 ou 2, **caractérisé en ce que** la nappe de formage est réalisée en forme de plaque et le cas échéant, de manière structurée spatialement.

4. Elément selon l'une des revendications 1 à 3, **caractérisé en ce que** la nappe de formage présente une épaisseur de matériau (D) jusqu'à près de 50 mm, en particulier jusqu'à près de 30 mm, et de préférence de 5 mm à 20 mm.

5. Elément selon l'une des revendications 1 à 4, **caractérisé en ce que** la nappe de formage est munie d'entailles (4) aménagées pour réaliser par exemple une allure en forme d'arc flexible de l'élément de surface (2).

6. Elément selon la revendication 5, **caractérisé en ce que** les entailles (4) s'étendent transversalement à l'étendue longitudinale de la nappe de formage.

7. Elément selon la revendication 5 ou 6, **caractérisé en ce que** les entailles (4) vont jusqu'à une profondeur de coupe (S) de la nappe de formage, laquelle comporte jusqu'à un maximum de près de 100%, en particulier jusqu'à un maximum de près de 95%, et de préférence jusqu'à un maximum de près de 90% ainsi que de manière particulièrement préférée, jusqu'à un maximum de près de 80% de l'épaisseur de matériau (D) de la nappe de formage, de sorte qu'un dos de nappe de formage continu (5) subsiste.

8. Elément selon l'une des revendications 1 à 7, **caractérisé en ce que** la nappe de formage est conçue de manière colorée.

9. Utilisation de nappes de formage pour la fabrication d'éléments de structure de mobilier et/ou de division d'espace (1 ; 10) selon l'une des revendications 1 à 8, dans laquelle la nappe de formage est fabriquée en fibres synthétiques qui sont reliées ensemble au niveau d'emplacements de croisement et de contact.

10. Utilisation selon la revendication 9, **caractérisée en ce que** les fibres synthétiques sont reliées ensemble sans liant **en ce qu'**elles sont mouillées avec une solution plastifiante et sont collées ensemble à température plus élevée.

11. Utilisation selon la revendication 10, **caractérisée en ce que** les fibres synthétiques sont collées ensemble à une température dans la plage de 80°C à 160°C.
